# EUROPÄISCHE PATENTANMELDUNG

(11) **EP 2 737 985 A2**
(43) Veröffentlichungstag der Anmeldung: **04.06.2014**
(21) Anmeldenummer: 13194953.9
(22) Anmeldetag: 28.11.2013
(51) Int. Cl.: B28B 7/38, B28B 19/00

(54) **Zusammensetzung zur Verwendung als Entschalungshilfsmittel**

(30) Priorität: 28.11.2012 DE 102012111549
(71) Anmelder: Alpin-Chemie GmbH, 87527 Sonthofen (DE)
(72) Erfinder: Winkler, Ralf-Peter, 87527 Sonthofen (DE)
(74) Vertreter: Hutzelmann, Gerhard

(57) **Zusammenfassung**

Zusammensetzung zur Verwendung als Entschalungshilfe und Auswaschlack für Betonerzeugnisse, wobei einerseits Wirkstoffe für die Entschalungshilfe als auch andererseits Wirkstoffe für die Auswaschung der Betonoberfläche in der Zusammensetzung enthalten sind und zusammen eine Schicht bilden.

## Beschreibung

Die Erfindung bezieht sich auf eine Zusammensetzung zur Verwendung als Entschalungshilfe und Auswaschlack für Betonerzeugnisse.

Es sind verschiedenartigste Auswaschlacke für Betonerzeugnisse bekannt, die jedoch nur schlecht verarbeitbar sind.

Andererseits sind auch verschiedenste chemische Entschalungshilfen für Betonprodukte bekannt.

Entweder bilden die Zusammensetzungen keine Schichten, oder müssen aufwendig abgewaschen werden bzw. neigen besonders bei Filmbildung aufgrund saurer Auslegung zur Rostbildung auf der Schalung.

Es ist zwar durchaus bekannt, diese beiden Eigenschaften miteinander zu kombinieren, jedoch sind diese Kombinationen nur schlecht anwendbar.

Die daraus resultierenden Verunreinigungen des Waschwassers sind nicht unerheblich und können nicht ignoriert werden.

Aufgabe der Erfindung ist es daher, eine Zusammensetzung vorzuschlagen, die einerseits hervorragende Eigenschaften hinsichtlich Entschalung als auch Auswaschung und andererseits eine leichte und umweltschonende Verarbeitbarkeit aufweist.

Diese Aufgabe wird erfindungsgemäß dadurch gelöst, daß einerseits Wirkstoffe für die Entschalungshilfe als auch andererseits Wirkstoffe für die Auswaschung der Betonoberfläche in der Zusammensetzung enthalten sind und zusammen eine Schicht bilden.

Durch die Schichtbildung wird einerseits die Wirksamkeit der Auswaschung begünstigt und andererseits eine gute Entschalbarkeit sichergestellt. Zudem lässt sich die Schicht als ganzes abziehen und entsorgen. Spätestens nach Trocknung der Schicht kann diese beispielsweise über den Hausmüll entsorgt werden. Eine Verunreinigung des Waschwassers findet nicht statt.

Dabei hat es sich als sehr vorteilhaft erwiesen, wenn ein Antihaftmittel, insbesondere ein Salz einer Aminocarbonsäure enthalten ist.

Salze einer Aminocarbonsäure haben sich als sehr gute Antihaft- und damit Trennmittel für Betonerzeugnisse erwiesen.

Äußerst vorteilhaft ist es erfindungsgemäß, wenn ein Polyvinylbutyral, Polyvinylalkohol oder dergleichen als Schichtbildner vorgesehen ist.

Hierdurch wird eine stabile Schicht gebildet.

Dabei hat es sich auch als sehr vorteilhaft erwiesen, wenn ein Co-Bindemittel vorgesehen ist, welches beispielsweise aus der Gruppe der Alkydharze stammen kann.

Durch den Einsatz mit dem Polyvinylbutyral verträglichen Co-Bindemitteln wird die Schichtbildung nochmals verbessert. Es werden stabile Schichten erzeugt.

Ebenfalls sehr vorteilhaft ist es gemäß einer weiteren Ausgestaltung der Erfindung, wenn ein Entschäumer, vorzugsweise ein modifiziertes Polysiloxan oder ein anderer Entschäumer vorgesehen ist.

Schaum würde zu Unregelmäßigkeiten in der Beschichtung führen, was wiederum eine ungleichmäßige Oberfläche des Betonerzeugnisses zur Folge hätte.

Eine weitere sehr vorteilhafte Ausgestaltung der Erfindung liegt vor, wenn ein Abbindeverzögerer, insbesondere ein Zucker oder modifizierter Zucker, Salze von Carbonsäuren wie beispielsweise Gluconate, Citrate oder dergleichen vorgesehen ist.

Es gibt eine Vielzahl von Abbindeverzögerern. Sehr gute Eigenschaften wurden jedoch mit Zucker und modifiziertem Zucker erzielt. Zudem ist Zucker nicht umweltschädlich. Aber auch mit Salzen von Carbonsäuren wurden sehr gute Ergebnisse erzielt und sind ebenfalls nicht umweltschädlich.

Gemäß einer weiteren Fortbildung der Erfindung ist es äußerst vorteilhaft, wenn ein Lösungsmittel, insbesondere ein Alkohol, Wasser oder andere Lösungsmittel vorgesehen sind.

Lösungsmittel sorgen für eine flüssige Zusammensetzung der Beschichtungssubstanz und ermöglichen so eine leichte Verarbeitbarkeit.

Dabei hat es sich als sehr vorteilhaft erwiesen, wenn ein schnell verdampfendes Lösungmittel vorgesehen ist.

Damit wird sichergestellt, daß die Beschichtung schnell einsatzbereit ist. Die Rüstzeiten, bis der Beton in die Schalung eingebracht werden kann wird so minimiert.

Sehr vorteilhaft ist es auch, wenn ein Farbstoff vorgesehen ist.

Damit kann sehr leicht optisch kontrolliert werden, ob die aufgebrachte Menge der Zusammensetzung ausreichend ist.

Eine weitere sehr vorteilhafte Ausgestaltung der Erfindung liegt auch vor, wenn ein Füllstoff vorgesehen ist.

Durch den Einsatz eines Füllstoffes wird eine größere Schichtdicke der Zusammensetzung erreicht.

Eine ebenfalls sehr vorteilhafte Fortbildung der Erfindung liegt vor, wenn ein Antiabsetzmittel, insbesondere ein Schichtsilikat in der Zusammensetzung vorgesehen ist.

Hierdurch wird ein Entmischen der Zusammensetzung insbesondere während der Verwendung verhindert.

Eine äußerst vorteilhafte Zusammensetzung liegt vor, wenn die Zusammensetzung folgende Inhaltsstoffe enthält:
PVB/PVOH 1-50 Gew-%, vorzugsweise 1-30 Gew-%
Trennmittel 1-10 Gew-%, vorzugsweise ca. 2 Gew-%
Entschäumer 0-5 Gew-%, vorzusgweise 0,1-5 Gew-%
Abbindeverzögerer 1-50 Gew-%
Füllstoff 0-30 Gew-%, vorzugsweise 1-20 Gew-%

Mit diesen Bestandteilen wurden beste Ergebnisse erzielt. Durch Variation des Anteils des Abbindeverzögerers wird die Auswaschtiefe des Betons beeinflusst.

Eine äußerst vorteilhafte erfindungsgemäße Beschichtung aus einer erfindungsgemäßen Zusammensetzung liegt vor, wenn die Beschichtung auf eine Schalung aufgebracht ist, die als Schalung für ein herzustellendes Betonteil dient.

Damit ist eine leichte Verarbeitbarkeit sichergestellt.

Im folgenden ist die Erfindung anhand eines Ausführungsbeispiels veranschaulicht.

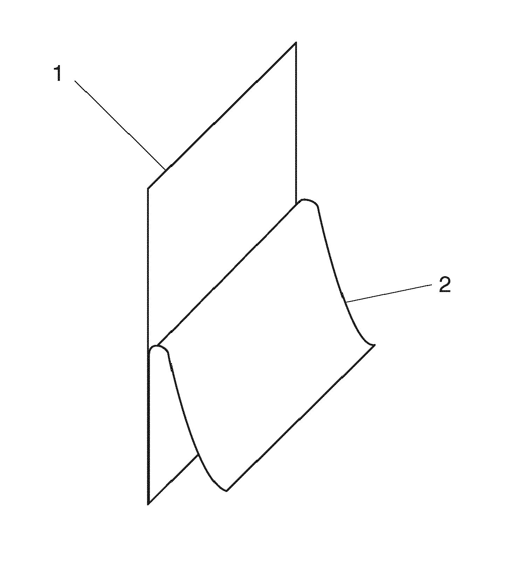

Dabei zeigt die einzige Figur eine Darstellung einer Schalung mit einer teilweise abgezogenen erfindungsgemäßen Beschichtung.

Eine Zusammensetzung aus 10% PVB mittlerer Kettenlänge, 2% Trennmittel, 0, 1 % Entschäumer, 11 % Abbindeverzögerer, Farbstoff und 2% Antiabsetzmittel und Füllstoff. Als Lösungsmittel ist Isopropylalkohol vorgesehen, wobei auch Ethanol oder dergleichen einsetzbar ist.

Das dabei eingesetzte Bindemittel ist nicht alkalisch löslich, so daß die Zusammensetzung nicht durch beim Abbinden austretendes Betonwasser angelöst und zerstört werden kann.

Als Füllstoff sind in diesem Beispiel Mikrohohlkugeln vorgesehen, die den Schichtaufbau unterstützen. Aber auch Schichtsilikate, andere Silikate oder nicht silikatische Füllstoffe, die nicht im Lösungsmittel lösbar sind, sind hier denkbar.

Diese Zusammensetzung wird auf die Schalung, in der das Betonerzeugnis gefertigt werden soll auf allen Kontaktflächen zum Beton aufgebracht. Die erforderliche Mindestschichtdicke ist durch den enthaltenen Farbstoff gut sichtbar. Sobald die aufgebrachte Schicht eine gleichmäßige Färbung zeigt, ist eine ausreichende Schicht aufgebracht. Eine darüber hinausgehende Schichtdicke ist nicht notwendig, beeinflusst das erzielte Ergebnis aber auch nicht negativ.

Die Zusammensetzung bildet auf der Schalung einen festen Film.

Wird nun Beton in die so behandelte Schalung eingebracht, so wirkt der in der Zusammensetzung enthaltene Abbindeverzögerer, im vorliegenden Ausführungsbeispiel handelt es sich hier um Zucker, auf den Beton ein. Nach Abbinden des Betons wird die Schalung entfernt. In der Regel bleibt der Film aus der Zusammensetzung auf der Schalung haften und kann dort problemlos wie eine Folie abgezogen werden. Selbst wenn der Zusammensetzungsfilm auf dem Betonerzeugnis haften bleiben sollte, kann er auch dort leicht mechanisch abgezogen werden.

Anstatt des Zuckers können auch Salze von Carbonsäuren, wie beispielsweise Gluconate, Citrate oder dergleichen als Abbindeverzögerer eingesetzt werden. Kombinationen sind möglich.

Etwaige verbleibende Reste können beim Abwaschen entweder mit einem Hochdruckreiniger oder aber mit einer Bürste, Besen oder dergleichen entfernt werden.

Der Film ist nicht wasserlöslich, sondern wird als Feststoff entsorgt, wobei dieser Feststoff unbedenklich hinsichtlich seiner Umweltverträglichkeit ist.

Nach Entfernen des Films durch Entschalen kann das Betonerzeugnis ausgewaschen werden. Die Auswaschtiefe bei der vorgenannten Zusammensetzung beträgt etwa vier Millimeter.

Je nach Kettenlänge des verwendeten PVB und der erwünschten Viskosität kann der Anteil an PVB variiert werden. Ebenso sind höhere oder niedrigere Anteile des Abbindeverzögerers denkbar.

Zusätzlich können Co-Bindemittel vorgesehen sein, die mit dem Hauptbindemittel verträglich sind. Beispielsweise Alkydharze haben sich für die Erfindung als tauglich erwiesen und können für eine nochmals verbesserte Schichtbildung sorgen.

Andere Lösemittel können ebenso eingesetzt werden. Durch die neutrale Auslegung der Zusammensetzung wird Rost auf den Schalungselementen weitgehend verhindert. Durch den Verzicht auf Wasser als Lösemittel wird ebenso die Neigung zur Rostbildung reduziert.

Nach dem Abziehen des Films vom Schalungsmaterial ist dieses gleich von Betonrückständen befreit und muss nicht extra aufwendig gereinigt werden. Vielmehr ist das Schalungsmaterial sofort wieder einsatzbereit. Etwaige Reste können leicht entfernt werden. Zudem entsteht kein Staub, da das Abbürsten von Resten entfällt.

Durch den Wegfall der Notwendigkeit der Reinigung wird auch der Wasserverbrauch deutlich reduziert, da weitgehend auf Waschwasser verzichtet werden kann.

Bei einer Zusammensetzung gemäß diesem Ausführungsbeispiel ist der Wirkstoff des Abbindeverzögerers nicht im Lösungsmittel lösbar. Vielmehr ist dieser in der Zusammensetzung verteilt. Deswegen ist es sinnvoll, ein Antiabsetzmittel zu integrieren um zumindest während der Verwendung der Zusammensetzung eine gleichmäßige Dispersion der Zusammensetzung zu erhalten.

Die Zusammensetzung kann auf die Schalung aufgestrichen, aufgerollt oder auch aufgesprüht werden. Die Art der Aufbringung ist hinsichtlich der Wirksamkeit nicht relevant. Einzig ausschlaggebend ist, daß die erforderliche Mindestschichtdicke erreicht wird.

Durch den Einsatz eines schnell verdampfenden Lösungsmittels können kurze Rüstzeiten eingehalten werden. Es muss nicht erst auf das Abbinden der Zusammensetzung bzw. die Schichtbildung gewartet werden. Der Beton kann kurze Zeit nach dem Aufbringen der Zusammensetzung auf die Schalung bereits eingebracht werden.

Als Entschäumer kann beispielsweise ein modifiziertes Polysiloxan eingesetzt werden.

Wird als Lösungsmittel Wasser eingesetzt, so muss bei Schalungselementen aus Stahl mit Rostbildung gerechnet werden.

Die erfindungsgemäße Zusammensetzung kann aufgrund ihrer Schichtbildung, die zu einem abziehbaren Film führt einfach und problemlos fachgerecht entsorgt werden.

Der Film haftet beim Entschalen in der Regel an der Schalung und kann dann von dieser Abgezogen werden. Etwaige Betonreste haften am Film. Auf diese Art und Weise können auch höher gelegene Betonteile gefertigt werden, ohne daß das Trennmittel beispielsweise auf Leitern vom Beton entfernt werden muss.

Auch bei größeren und großen Elementen kann der Film noch problemlos von der Schalung abgezogen werden. Versuche haben bereits gezeigt, daß Filme von zwei auf ein Meter problemlos einstückig abziehbar sind.

Würde der Film auf dem Beton haften, so würde dieser beim Auswaschen des Betons in kleinste Teilchen zerlegt werden. Dies würde wiederum zu einem Entsorgungsproblem führen, da Abwasserkanäle oder dergleichen sehr leicht verstopfen würden, wie dies bei bekannten Zusammensetzungen der Fall ist.

Da die Zusammensetzung keine gefährlichen und umletschädlichen Substanzen enthält, kann der Film nach Gebrauch leicht entsorgt werden.

Auf kohlenwasserstoffhaltige Lösungsmittel wie beispielsweise Spezialbenzin oder Testbenzin kann verzichtet werden, wodurch eine Gesundheitsgefährdung deutlich reduziert ist.

Zudem sind keine Säuren enthalten, die einerseits zu Rostbildung auf metallischen Schalungselementen führen und andererseits Reizungen der Atemwege erzeugen würde. Der in der Regel stechende Geruch beim Verarbeiten von säurehaltigen Entschalungshilfsmitteln entfällt vollständig.

Die als Lösungsmittel eingesetzten Alkohole und auch das Fehlen von Säuren bedingen keine besonderen Schutzvorkehrungen, wie beispielsweise Atemschutz oder dergleichen.

In der Figur ist eine Schalungsplatte mit 1 bezeichnet. Auf dieser befindet sich ein Film 2 der erfindungsgemäßen Zusammensetzung. In der Zeichnung ist der Zustand nach dem Entschalen dargestellt. Der Film 2 ist zusammen mit etwaigen Rückständen des Betons bereits teilweise von der Schalungsplatte 1 abgezogen.

## Patentansprüche

1. Zusammensetzung zur Verwendung als Entschalungshilfe und Auswaschlack für Betonerzeugnisse, **dadurch gekennzeichnet, daß** einerseits Wirkstoffe für die Entschalungshilfe als auch andererseits Wirkstoffe für die Auswaschung der Betonoberfläche in der Zusammensetzung enthalten sind und zusammen eine Schicht bilden.

2. Zusammensetzung nach Anspruch 1, **dadurch gekennzeichnet, daß** ein Antihaftmittel, insbesondere ein Salz einer Aminocarbonsäure enthalten ist.

3. Zusammensetzung nach Anspruch 1 oder 2, **dadurch gekennzeichnet, daß** ein Polyvinylbutyral, Polyvinylalkohol oder dergleichen als Schichtbildner vorgesehen ist.

4. Zusammensetzung nach Anspruch 3, **dadurch gekennzeichnet, daß** ein Co-Bindemittel vorgesehen ist, welches beispielsweise aus der Gruppe der Alkydharze stammen kann.

5. Zusammensetzung nach einem der Ansprüche 1 bis 4, **dadurch gekennzeichnet, daß** ein Entschäumer, vorzugsweise ein modifiziertes Polysiloxan oder ein anderer Entschäumer vorgesehen ist.

6. Zusammensetzung nach einem der vorangehenden Ansprüche, **dadurch gekennzeichnet, daß** ein Abbindeverzögerer, insbesondere ein Zucker oder modifizierter Zucker, Salze von Carbonsäuren, wie beispielsweise Gluconate, Citrate oder dergleichen vorgesehen ist.

7. Zusammensetzung nach einem der vorangehenden Ansprüche, **dadurch gekennzeichnet, daß** ein Lösungsmittel, insbesondere ein Alkohol, Wasser oder andere Lösungsmittel vorgesehen sind.

8. Zusammensetzung nach Anspruch 7, **dadurch gekennzeichnet, daß** ein schnell verdampfendes Lösungmittel vorgesehen ist.

9. Zusammensetzung nach einem der vorangehenden Ansprüche, **dadurch gekennzeichnet, daß** ein Farbstoff vorgesehen ist.

10. Zusammensetzung nach einem der vorangehenden Ansprüche, **dadurch gekennzeichnet, daß** ein Füllstoff vorgesehen ist.

11. Zusammensetzung nach einem der vorangehenden Ansprüche, **dadurch gekennzeichnet, daß** ein Antiabsetzmittel, insbesondere ein Schichtsilikat in der Zusammensetzung vorgesehen ist.

12. Zusammensetzung nach einem der vorangehenden Ansprüche, **dadurch gekennzeichnet, daß** die Zusammensetzung folgende Inhaltsstoffe enthält:
PVB/PVOH 1-50 Gew-%, vorzugsweise 1-30 Gew-%
Trennmittel 1-10 Gew-%, vorzugsweise ca. 2 Gew-%
Entschäumer 0-5 Gew-%, vorzusgweise 0,1-5 Gew-%
Abbindeverzögerer 1-50 Gew-%
Füllstoff 0-30 Gew-%, vorzugsweise 1-20 Gew-%

13. Beschichtung aus einer Zusammensetzung nach einem der vorangehenden Ansprüche, **dadurch gekennzeichnet, daß** die Beschichtung auf eine Schalung aufgebracht ist, die als Schalung für ein herzustellendes Betonteil dient.
